# EUROPEAN PATENT SPECIFICATION

(11) **EP 2 470 581 B1**
(45) Date of publication and mention of the grant of the patent: **13.08.2014**
(21) Application number: 10757466.7
(22) Date of filing: 24.08.2010
(51) Int. Cl.: C08G 18/64, C08G 59/18, C09D 175/04

(54) **AMINE-EPOXY ADDUCTS AND THEIR USE FOR PREPARING POLYUREA AND POLYUREA-POLYURETHANE COATINGS**
AMINEPOXIDADDUKTE UND IHRE VERWENDUNG ZUR HERSTELLUNG VON POLYHARNSTOFF- UND POLYHARNSTOFF-POLYURETHANBESCHICHTUNGEN
PRODUITS D'ADDITION D'AMINE-ÉPOXY ET LEUR UTILISATION POUR LA PRÉPARATION DE REVÊTEMENTS EN POLYURÉE ET POLYURÉE-POLYURÉTHANE

(30) Priority: 27.08.2009 HU 0900532; 22.07.2010 HU 1000390
(43) Date of publication of application: 04.07.2012
(73) Proprietor: Polinvent KFT., 1221 Budapest (HU)
(72) Inventor: NAGY, Gábor, H-1112 Budapest (HU); BALÁZS, Ferenc, H-2310 Szigetszentmiklós (HU); CSELIK, György, H-1202 Budapest (HU)
(74) Representative: Fehérvari, Flora
(86) International application number: PCT/HU2010/000090
(87) International publication number: WO 2011/024014

(56) References cited:
- EP-A1- 0 229 459
- DE-A1- 19 520 855
- US-A1- 2002 183 450

## Description

The invention relates to amine epoxy adducts and to their use for preparing polyurea and polyurethane coatings.

More specifically, the invention relates to polymeric amine-epoxy adducts and adduct blends having symmetric and asymmetric structures, and to their application for sprayable, solvent-free (VOC-free) polyurea (PU) and polyurea-polyurethane (PU-PUR) coatings.

### Background of the invention

Sprayable VOC-free PU and PU-PUR hybrid systems are widely used for the coating of different substrates, such as metals, polymers, concrete, etc. One of the advantageous features of such coatings is that the coating hardens relatively quickly.

However, the state-of-the-art, two-component, hot sprayed PU coatings show moderate adhesion to metal surfaces. Therefore, in most cases, first an epoxy primer layer is applied onto the metal, and the coating is applied after its hardening. Epoxy primer, however, sets usually rather slowly. Under 10°C the process will even not occur without the heating of the substrate to be coated. This way fast curing, one of the main advantages of PU systems, will be lost or considerably diminished.

Further problems are that setting time of PU coatings cannot be regulated freely, most known primary di-and polyamines react with isocyanates too quickly, and that these compounds usually contain also considerable amounts of aromatic diamine chain extenders being harmful to the natural environment, and also to the workers. These substances belong to the materials of medium to high risk. (Manufacturing and application of some of those, e.g. the ones with N50/53 classification will be strongly limited by the new European regulation on chemical substances [(REACH]).

US Patent 6,723,821 suggests the use of certain polyamine-epoxide adducts for improving the adhesion of polyurea coatings. According to the description, these adducts are formed by reacting a polyamine with a compound containing an epoxy group while the epoxy ring opens. Among the epoxy compounds primarily Bisphenol A, Bisphenol F and epoxy novolac based products are mentioned, which are excellent film forming materials per se, and are successfully applied in lacquer industry. Among the amine components almost the full commercial product assortment is listed, but in the examples only aliphatic and aromatic primary diamines are shown. This way, the prepared adduct contains always at least two primary amino groups.

On concrete surface better adhesion is achieved than with the polyurea containing no adduct, but the product has not been tested on other surfaces.

According to our own examinations, coatings prepared with adducts according to the above mentioned document do not show satisfactory adhesion to metal surface. (See later in ***Table 6*/*4***.)

The object of the invention is to provide liquid polymer amine-epoxy adducts, which are suitable to prepare sprayable, solvent-free polyurea and polyurea-polyurethane coatings with excellent adhesion, and with adjustable pot life, i.e. with reactivity with isocyanates that can be regulated at will in a wide range.

It is a further object of the invention to provide amine-epoxy adducts wherein the amount of especial-ly hazardous starting amines remains under 0.1% m/m.

### Summary of the invention

The invention relates to amine-epoxy adducts and adduct blends with a maximum viscosity of 300 mPas at 70 °C, and with an average molecular mass (*M̅ₙ*) between 300 and 8000. The amine-epoxy adducts according to the invention contain at least one hydroxyl group formed during the amine-epoxy addition and at least two amino groups being able to react with isocyanate groups. There is maximun one primary amino group in the molecule. The invention also relates to the process for preparing the above mentioned adducts. The adduct according to the invention is prepared by mixing the startings amino and epoxy compounds in a suitable ratio, and heating the mixture until complete consumption of the epoxy groups. Preferably, polymeric amino and/or epoxy compounds are used as starting compounds.

The adducts according to the invention can be used for the preparation of sprayable PU and PU-PUR coat-ings. Thus the invention relates to the use of amine-epoxy adducts according to the invention in the preparation of PU and PU-PUR coatings, and also to the coatings prepared.

By the use of the adducts according to the invention the pot life of PU and PU-PUR coatings can be regulated in wide range, and the properties of the coatings prepared this way, such as adhesive strength on metal surface and corrosion resistance are better than those of the known coatings.

Adducts and adduct blends according to the invention are applied for preparing PU or PU-PUR adducts as follows: the amine-epoxy adduct or adduct blend according to the invention are partly or fully substituted for one or more components of the amine blends i.e. of their "A" components.

The invention also relates to the preparation of hot sprayed PU primer, wherein one or more amine epoxy adduct according to the invention having a viscosity of less than 100 mPas at 70 °C is substituted for a part of the amine components of the PU.

### Detailed description of the invention

The invention relates on the one hand to amine-epoxy adducts and adduct blends. By the suitable choice of the starting amines and epoxy compounds we are able to prepare adducts having various structures and properties. The average molecular mass of the amine-epoxy adducts according to the invention is between 300 and 8000, preferably between 300 and 6000. Amine-epoxy adducts according to the invention contain at least one, preferably more than one alcoholic hydroxyl groups which are formed during the amine-epoxy addition. Amine-epoxy adducts according to the invention are characterized by the following:
- they contain at least two amino groups per molecule which are able to react with isocyanate groups, and maximum one of these amino groups is a primary one,
- they are polymers according to the OECD definition i.e. the REACH classification, see *http:llwww.oecd.orgldocument*/*54*/*0,3343,en_2649_34365_35056054_1_1_1_1.00.html*
- their viscosity at 70 °C is not more than 300 mPas.

Amines useful for preparing the amine-epoxy adducts according to the invention may be primary or secondary aliphatic, cycloaliphatic, araliphatic, aromatic, mono-, di- and triamines. Some preferred starting amines are listed in ***Table 1.***

**Table 1.**

| ***Parameters of the starting amine components*** | | | | | |
|---|---|---|---|---|---|
| **Nr.** | ***CAS-Nr.*** | ***M or M̅ ₙ (g*/*mol)*** | ***Name*** | ***Manufacturer*** | ***Hazard code of the amine*** |
| ***1. Primary monoamines*** | | | | | |
| 1.1. | 62-53-3 | 93,13 | Aniline | BASF, Bayer | T, N (R50), carc. |
| 1.2. | 578-54-1 | 121,18 | 2-Ethylaniline | Albemarle | T, Xn |
| 1.3 | 579-66-8 | 149,23 | 2,6-Diethylaniline | Albemarle | Xₙ |
| 1.4. | 100-46-9 | 107,16 | Benzylamine | BASF | C, Xₙ |
| 1.5. | 108-91-8 | 99,18 | Cyclohexylamine | Dayang, Brenn-tag | C |
| 1.6. | 7003-32-9 | 113,2 | 2-Methylcyclohexylamine | Air Products | F,C |
| 1.7. | 14205-39-1 | 115,13 | Methyl-3-aminocrotonate | Lonza | Xᵢ |
| 1.8. | 104-75-6 | 129,24 | 2-Ethylhexylamine | BASF | T, C |
| 1.9. | 107-45-9 | 129,24 | 1,1,3,3-Tetramethyl-butylamine (tert-Octylamine) | BASF | F, C, Xₙ |
| 1.10. | 618-36-0 | 121,18 | DL-1-Phenylethylamine | BASF | C, Xₙ |
| 1.11. | 94-70-2 | 137,18 | o-Phenetidine (2-Etoxyaniline) | | T |
| 1.12. | 112-90-3 | 267,49 | Oleylamine | Akzo | C, N |
| 1.13. | 83713-01-3 | ~600 | Jeff'. M600 | Huntsman | Xₙ, Xᵢ polymer |
| 1.14. | 83713-01-3 | ∼2000 | Jeff. M2005 | Huntsman | Xₙ, Xᵢ polymer |

| ***2. Primary diamines*** | | | | | |
|---|---|---|---|---|---|
| 2.1. | 15520-10-2 | 116,21 | 2-methyl-1,5-diaminopentane | Invista | Xn, C |
| 2.2. | 124-09-4 | 116,21 | 1,6-Diaminohexane | BASF | Xn, C |
| 2.3. | 694-83-7 | 114,19 | 1,2-Diaminocyclohexane | Du Pont | C |
| 2.4. | 2579-20-6 | 142,24 | 1,3-Bis(aminomethyl)cyclohexane (1,3-BAC) | Itochu | C |
| 2.5. | 1761-71-3 | 210,36 | 4,4'-Methylenebis-(cyclohexylamine) | BASF | Xn, C, N (R51/53) |
| 2.6. | 6864-37-5 | 238,41 | 4,4'-Methylenebis(2-methyl-cyclohexylamine) | P+M | T, C, N (R51/53) |
| 2.7. | 2855-13-2 | 170,3 | Isophoron diamine (Vestamin IPD) | Degussa | Xn |
| 2.8. | 9046-10-0 | ∼240 | Jeff. D230 | Huntsman | C polymer |
| 2.9. | 9046-10-0 | ∼400 | Jeff. D400 | Huntsman | C, Xₙ polymer |
| 2.10. | 9046-10-0 | ∼2000 | Jeff. D2000 | Huntsman | C, Xₙ polymer |
| 2.11. | 65605-36-9 | ∼600 | Jeff. ED600 | Huntsman | polymer |
| 2.12. | 65605-36-9 | ∼900 | Jeff. ED900 | Huntsman | polymer |
| 2.13. | 929-59-9 | ∼148 | Jeff. EDR148 | Huntsman | Xₙ |
| 2.14. | 960525-56-8 | | PolyTHF-Amine 350** | BASF | C, N (R50/53) polymer |
| 2.15. | 960525-56-8 | 1600-1800 | PolyTHF-Amine 1700** | BASF | C, N (R50/53) polymer |
| 2.16 | 68479-98-1 | 178,28 | Ethacure 100 = Lonzacure 80 | Albemarle Lonza | Xₙ, N |
| 2.17 | 1477-55-0 | 136,19 | m-Xylylenediamine (MXDA) | Itochu | C |

| ***3.Primary triamines*** | | | | | |
|---|---|---|---|---|---|
| 3.1. | 39423-51-3 | ∼400 | Jeff. T403 | Huntsman | C, Xₙ |
| 3.2. | 64852-22-8 | ∼3000 | Jeff. T3000 | Huntsman | Xᵢ polymer |
| 3.3. | 64852-22-8 | ∼5000 | Jeff. T5000 | Huntsman | Xᵢ polymer |

| ***4.Secondary diamines*** | | | | | |
|---|---|---|---|---|---|
| 4.1. | [ELINCS: 433-260-2]⁺ | | Desmophen NH 1220 | Bayer | R52/53 |
| 4.2. | 136210-30-5 | | Desmophen NH 1420 | Bayer | Xi |
| 4.3. | 136210-32-7 | | Desmophen NH 1520 | Bayer | Xi |
| 4.4. | 81455-53-0 | ∼240 | Jeff. SD231 | Huntsman | C, Xₙ |
| 4.5. | 81455-53-0 | ∼400 | Jeff. SD401 | Huntsman | C, Xₙ polymer |
| 4.6. | 81455-53-0 | ∼2000 | Jeff. SD2001 | Huntsman | C, Xₙ polymer |
| 4.7. | 156105-38-3 | ∼750 | Jefflink 754 | Huntsman | N, C, Xₙ polymer |
| 4.8. | 5285-60-9 | ∼310 | Ethacure 420 = Unilink 4200 | Dorf Ketal | - |

| | | | | | |
|---|---|---|---|---|---|
| *Jeff. Stands for Jeffamine™ ** Most of these ones are primary diamines, but primary diamines containing secondary amines in the middle region of the chain can also be found among the products, see http://www.hansonco.net/PolyTHF-Amin1700-TDS.pdf | | | | | |

According to the invention, polyoxylalkileneamines i.e. polyetheramines are preferred, which contain homogenous or mixed polyether chains built up from ethylene oxide, propylene oxide or polytetrahydrofuran (PTHF), such as for example, the products of Huntsman belonging to the Jeffamine series: M: monoamine, D: diamine, T: triamine, SD: secondary diamine etc., and the numbers following the letters are values referring to the average molecular mass of the product.

Beyond those, for example, the following amines can also be used:
■ from other diamines, 4,4'-diaminodiphenyl ether (CAS No.: 101-80-4), or bis(3-aminophenyl) sulfone, bis(4-aminophenyl) sulfone (CAS No.: 80-08-0), 1,4-bis(3-aminopropyl)-piperazine (CAS No.: 7209-38-3) etc.;
■ from secondary diamines: piperazine (CAS No.: 110-85-0), N,N'-di-tertiary-butyletylenediamine (CAS No.: 4062-60-6) etc., furthermore:
■ amine alcohols, such as e.g. 1-amino-2-propanol (CAS No.: 78-96-6), 2-amino-2-methyl-1-propanol (CAS No.: 124-68-5), 2(2-aminoethyl-amino)ethanol (CAS No.: 111-41-1), N-(2-hidroxypropyl)-ethylendiamine (CAS No.: 123-84-2) etc.

Also preferred starting amines are the already mentioned aromatic and cycloaromatic amines used in PU and/or PUR manufacturing as chain extenders, which are, however, hazardous for the environment (toxic, carcinogenic), such as for example:
- 1,4-phenylenediamine (toxic, N50/53),
- 1,3-phenylenediamine (toxic, mutagen, N50/53),
- MOCA = 4,4'-methylenebis(2-chloraniline) (toxic, carcinogenic, N50/53).

Cheap adducts containing aromatic secondary amines or, combined with diamine, adducts containing secondary and primary amines, characterized by asymmetric structure and providing advantageous properties can be prepared by using monomines which would be very dangerous by themselves, such as:
- o-, m-, p-toluidine isomers (disadvantage: toxic, N50),
- 2,3-; 2,4- ; 2,5-; 3,5-dimethylaniline isomers (disadvantage: toxic, N51/53), etc.
(For classification data and further parameters see e.g. the actual volume of TCI Laboratory Chemicals, 2008-2009, www.tcieurope.eu).

Mixtures of the above listed amines may also be used for easier regulation of the reaction time with isocyanates during the preparation of the coating. For example, it is preferred to apply amine combination where at least 50% of the amino groups in the obtained adduct are secondary.

For the preparation of adducts reacting slowly with isocyanates some aliphatic, cycloaliphatic, araliphatic and aromatic primary monoamines are especially preferable due to their steric hindrance, such as e.g.: 2-ethylaniline, 2-methyl-cyclohexylamine, tert-octylamine and similar ones. Bis-aspartate type secondary amines (e.g. Desmophen products of Bayer) are also preferable to regulate the isocyanate reactivity due to their various structures.

For adducts according to the invention epoxy compounds listed in Table 2 are preferred as epoxy components.

**Parameters of the starting epoxy components Table 2.**

| ***Nr.*** | ***CAS-Nr.*** | ***M or M̅ ₙ (g*/*mol)*** | ***Name*** | ***Manufacturer and brand*** | ***Hazard code*** | ***Epoxy equivalent (g*/*equ.)*** | **η *(25°C) [mPa.s]*** |
|---|---|---|---|---|---|---|---|
| ***1. Monoepoxy compounds (monoepoxy type active diluents)*** | | | | | | | |
| 1.1. | 2426-08-6 | 130 | Butyl glycidyl ether | AH-5= Araldite RD1 (Huntsman) | Xₙ | 140-160 | 1,2-1,8 |
| 1.2. | 3101-60-8 | 206 | p-tert-butyl-phenyl glycidyl ether | AH-7 (P+M Kft.) | Xᵢ | 220-240 | 10-30 |
| 1.3. | 2461-15-6 | 186 | 2-ethyl-hexyl-glycidylether | AH-17 (P+M Kft.) | Xᵢ | 210-230 | 2-4 |
| 1.4. | 68609-97-2 | 242-270 | C12-C14 fatty alcohol glycidyl ether | AH-24 (P+M Kft.) | Xᵢ | 270-313 | 5-10 |
| 1.5. | | 460-500 | Ethoxyled C12-C14 fatty alcohol glycidyl ether | AH-P61 (P+M Kft.) | Polymer | 470-490 | 15-25 |
| 1.6. | 2530-83-8 | 236,34 | [3(2,3-Epoxypropoxy)-propyl] trimetoxysilane | Onichem Wacker | Xi | | |
| 1.7. | 106-91-2 | 142,15 | Glycidyl metacrylate | BASF | Xn | | |
| 1.8. | 26761-45-5 | 228,33 | Neodecan(Versatic)acid glycidyl ester (Cardura E) | Eporezit E 044 (P+M Kft.) | Xi, N (R51/5 3) | 235-244 | 10 |

| ***2. Diepoxy compounds (diepoxy type active diluents)*** | | | | | | | |
|---|---|---|---|---|---|---|---|
| 2.1. | 2425-79-8 | 202 | 1,4-butanediol diglycidyl ether | AH-3 (P+M Kft.) | Xₙ | 130-145 | 12-22 |
| 2.2. | 17557-23-2 | 216 | Neopentylglycol diglycidyl ether | A H-14 (P+M Kft.) | Xᵢ | 150-160 | 15-25 |
| 2.3. | 16096-31-4 | 230 | 1,6-hexanediol diglycidyl ether | AH-18 (P+M Kft.) | Xᵢ | 147-161 | 15-25 |
| 2.4. | 26142-30-3 | 188 | Polypropyleneglycol diglycidyl ether | AH-19 (P+M Kft.) or Epilox® M985 (Leuna Harz GmbH.) | - polymer | 313-345 | 40-90 |
| 2.5. | 30499-70-8 | 302 | Trimethylopropane triglycidyl ether | AH-20 (P+M Kft.) | Xᵢ | 140-150 | 120-180 |
| 2.6. | 30583-72-3 | 353 | H₁₂ Dian-bis-glycidyl ether | Epilox® P22-00 (Leuna Harz GmbH.) | Xi | 205-235 | 1500-3500 |

| ***3. Epoxy resins (di- and polyepoxy resins)*** | | | | | | | |
|---|---|---|---|---|---|---|---|
| 3.1. | 25068-38-6 | ≥340 | Bisphenol A liquid epoxy resin | Epidian 6D ≈ Epikote 828 (CIECH) | Xᵢ | 184-190 | ∼12000-14000 |
| 3.2. | 28064-14-4 | ≥312 | Bisphenol F liquid epoxy resin | DER354 (DOW) | Xᵢ, N | 167-174 | ∼5000 |
| 3.3. | 28064-14-4 | | Novolac liquid epoxy resin | DEN 425 (DOW) | Xᵢ, N | 169-175 | 9500-12500 |
| 3.4. | 25068-38-6 | 880 | Bisphenol A based solid epoxy resin | Epikote 1001 ≈ Epidian 2PA (CIECH) | Xi, R52/53 | | 5,3-6,8 |
| 3.5. | 25036-25-3 | 750-1100 | Bisphenol A based solid epoxy resin | Epikote 1004 ≈ Epidian 011 (CIECH) | Polymer | 806-909 | 370-550** |

| | | | | | | | |
|---|---|---|---|---|---|---|---|
| **measured in 40% solution of diethylene-glycol monobutyl ether at 25°C. | | | | | | | |

Further epoxy compounds which can be used beyond the ones listed in the Table are, for example:
■ From monoepoxy compounds:
   o-cresyl glycidyl ether (e.g. AH-6 of P+M Kft.)
   ethoxylated C10 fatty alcohol glycidyl ether (e.g. AH-P63 of P+M Kft.)
   ethoxylated C13-C15 fatty alcohol glycidylether (e.g. AH-P62 of P+M Kft.)
■ From active diluents, the following di- and polyepoxy compounds:
   cyclohexanedimethanol diglycidyl ether (e.g. AH-11 of P+M Kft.)
   glycerol-triglycidyl ether (e.g. AH-12 of P+M Kft.)
   etloxylated glycerol-triglycidyl ether (e.g. AH-P64 at P+M Kft.)
   trimethylol-propane-triglycidyl ether (e.g.AH-20 at P+M Kft.)

According to the invention, the low viscosity mono-, di- and polyepoxy compounds i.e. active diluents, their mixture, as well as epoxy resins and resin mixtures containing active diluents are especially advantageous as starting epoxy compounds.

For example, active diluents of the type AH-3, AH-5, AH-7, AH-14, AH-17, AH-18, AH-P61, Epilox M985 are preferred.

For the preparation of adducts according to the invention numerous combinations of the above listed amines and epoxy compounds can be used. For example, primary mono-, di- and triamines or their mixtures can be reacted with mono-, di-, tri- and tetraepoxy compounds, and with their mixtures in various ratios. For better overview, such combinations are shown in ***Table 3*** and ***Table 4.***

Among adducts prepared by the combinations, the following ones fall outside the scope of the present invention:
- the ones not being polymers,
- the ones containing more than one primary amino groups, and
- the ones not containing at least two amino groups per molecule, which are able to react with the isocyanate group.

Consequently, adducts containing only tertiary amino groups are outside the scope of the invention.

**Table 3.**

| Nr. of adduct variation | Amine | | Epoxy compound | | Amine group(s) in the adduct *Their reaction with isocyanates* |
|---|---|---|---|---|---|
| | Type | amount (mol) in the adduct | Type | amount (mol) in the adduct | |
| 1. | **primary** monoamine | 1 | monoepoxy | 1 | Secondary monoamine. **"NO"** |
| | | | | | *Disadvantageous in PU system, chain termination effect.* |
| 2. | **primary** monoamine | 2 | Diepoxy | 1 | Secondary diamine. |
| | | | | | *Slow reaction.* |
| 3. | " | 3 | Triepoxy | 1 | Secondary triamine. |
| | | | | | *Slow reaction.* |
| 4. | " | 4 | tetraepoxy | 1 | Secondary tetramine. |
| | | | | | *Slow reaction.* |
| 5. | monoa-mine+ diamine | 2 | triepoxy | 1 | One primary and three secondary amino groups are formed in a two-step reaction per molecule. |
| | | 1 | | | *Primary amine reacts fast, the rest slow.* |
| 6. | **primary** diamine | 1 | monoepoxy | 1 | One primary and one secondary amino group per molecule. |
| | | | | | *Primary amine reacts fast, the secondary slow*. |
| 7. | " | 1 | " | 2 | Secondary diamine. |
| | | | | | *Slow reaction.* |
| 8. | " | 2 | monoepoxy +diepoxy | 1 | Four secondary amines are formed by a two-step reaction. |
| | | | | 1 | *Slow reaction.* |
| 9. | " | 2 | diepoxy | 1 | Two primary and two secondary amines per molecule. "NO", USA |
| | | | | | *High risk of polymerization.* |
| 10. | " | 3 | triepoxy | I | *Polymerization occurs.* "NO" |
| 11. | **primary** triamine | 1 | monoepoxy | 1 | Two primary amines remain, one secondary is formed. **"NO"** |
| | | | | | *Fast, then slow further reaction.* |
| 12. | " | 1 | " | 2 | One primary amine remains, two secondary ones are formed. |
| | | | | | *Fast, then slow reaction.* |
| 13. | " | 1 | " | 3 | Secondary triamine. |
| | | | | | *Slow reaction.* |
| 14. | " | 2 | diepoxy | 1 | Four primary amines remain, two secondary ones are formed. **"NO"** |
| | | | | | *High risk of polymerization.* |
| 15. | " | 2 | monoepoxy + diepoxy | 2 | Secondary hexamine prepared by a two-step reaction. |
| | | | | 1 | |

| | | | | | |
|---|---|---|---|---|---|
| **"NO" = Outside the scope of the invention!** **Further variations with only primary amines do not belong to the invention.** **USA = the patent relating to amine epoxy adducts (**US 6,723,821**) describes these ones in detail.** | | | | | |

**Table 4.**

| Nr. of adduct variation | Amine | | Epoxy compound | | Amino group(s) in the adduct |
|---|---|---|---|---|---|
| | Type | amount (mol) in the adduct | Type | amount (mol) in the adduct | |
| 1. | secondary monoamine | 1 | monoepoxy | 1 | **Tertiary** monoamine. **"NO"** |
| 2. | secondary monoamine | 2 | diepoxy | 1 | **Ditertiary** amine**. "NO"** |
| 3. | " | 3 | Triepoxy | 1 | **Tritertiary** amine. **"NO"** |
| 4. | " | 4 | tetraepoxy | 1 | **Tetratertiary** amine. **"NO"** |
| 5 | monoamine + diamine | 2 | triepoxy | 1 | One **secondary** and three **tertiary** amines are formed in a two-step reaction. **"NO"** |
| | | 1 | | | |
| 6. | secondary diamine | 1 | monoepoxy | 1 | One **secondary** and one **tertiary** amine in the molecule. **"NO"** |
| 7. | " | 1 | " | 2 | Two **tertiary** amines are formed. **"NO"** |
| 8. | " | 2 | monoepoxy +diepoxy | 1 | Four **tertiary** amine groups are formed in a two-step reaction. **"NO"** |
| | | | | 1 | |
| 9. | " | 2 | Diepoxy | 1 | Two **secondary** and two **tertiary** amines per molecule. High risk of polymerization! **"NO"** |
| 10. | " | 3 | triepoxy | 1 | Polymerization occurs! **"NO"** |
| 11. | secondary triamine | 1 | monoepoxy | 1 | Two **secondary** and one **tertiary** amine per molecule. Certain adducts can be used! |
| 12. | " | 1 | " | 2 | One **secondary** and two **tertiary** amines per molecule. **"NO"** |
| 13. | " | 1 | " | 3 | Three **tertiary** amines per molecule. **"NO"** |
| 14. | " | 2 | diepoxy | 1 | Four **secondary** and two **tertiary** amines per molecule. High viscosity. **"NO"** |
| | | | | | High risk of polymerization! |
| 15. | " | 2 | monoepoxy + diepoxy | 2 | **Tertiary** hexamine prepared by two-step reaction. **"NO"** |
| | | | | 1 | |

| | | | | | |
|---|---|---|---|---|---|
| **"NO" Outside the scope of the invention!** | | | | | |

It can be seen in ***Table 4*** that, starting with purely secondary amines, there is only one case when we can obtain adducts according to the invention. Also in this case a tertiary amino group can be formed in the molecule, which may cause problems both for preparation and application. Consequently, the use of secondary amines alone has only ignorable importance for the invention. Secondary amines, combined with primary amines may only be important as so-called active diluents.

Our goal is to prepare adducts which are polymers according to the REACH classification. Therefore, we preferably choose such combination of raw materials wherein at least one of them is classified as being polymeric. It means, the average number of monomer units is more than 3, and none of the homologues represents more mass than 50% of the whole raw material. See Guidance for monomers and polymers, European Chemicals Agency, 2008. http://guidance.echa.europa.eu/docs/ guid-ance document/polymers en.pdf; or Gyula Körtvélyessy: About REACH in another way: monomers-polymers (in Hungarian), http://www.kortvelyessy.extra.hu/REACH/ polimerek monomerek.pdf)

When, according to the invention, one or both raw materials are polymers according to said classifica-tion, then the obtained adduct is not pure material, but a blend of adduct molecules.

The invention further relates to a process for preparing adducts and adduct-blends according to the invention. In the course of the process one or more amino and epoxy raw materials are mixed in a suitable ratio and heated. The process may be carried out in one or more steps. If the process is carried out in more, preferably in two steps, it comprises the following steps:
a) in the first step a di- or polyepoxy compound is reacted with monoamine, and the obtained product is reacted with another mono- or diamine, or
b) in the first step, a primary di- or polyamine is reacted with a monoepoxy compound, and the obtained product is reacted with another mono- or diepoxy compound.

If the starting amines are especially hazardous, then the number of steps may be three or even more, in order to fulfill the REACH requirements.

The progression of the reaction is monitored by measuring the amine and epoxy numbers. Amine and epoxy compound are usually applied in equimolar amount. In certain cases maximum 50 mol%, preferably maximum 30 mol% amine excess is applied. Instead of excess primary amine, so-called active diluent may also be used, which is of secondary diamine character: of this, also maximum 50 mol%, preferably maximum 30 mol% is used.

Such amine excess is preferably applied when the starting materials are primary diamine and diepoxy compounds.

If the starting materials are the above mentioned hazardous ones being harmful to human health, the reaction will be continued so long and at so high temperature (if necessary, applying also special catalysts) till the ratio of the remaining starting amine(s) decreases below 0.1 mass% related on the final amine-epoxy adduct. (So that we do not exceed the REACH limit value).

Another feasible way is that the hazardous amine is first reacted with a low (5 to 10 mol%) epoxy excess, and then we bind the free epoxy groups by adding another amine having more favorable properties. It is preferred that the ratio of adduct(s) from the hazardous amine(s) is over 90% in the obtained adduct mixture.

According to the invention we can advantageously prepare asymmetric adducts, usually in two steps. For example, first a primary monoamine is reacted with an epoxy group of a diepoxy compound, and the so obtained semi-adduct is reacted with another amine. It is also feasible that in the first step a di- or triamine is reacted with a monoepoxy compound, and in the second step another mono- or diepoxy compound is applied.

During the adduct preparation, especially in industrial scale, dosage and/or mixing irregularities may cause local variations in concentration. Due to the further reaction of the formed secondary amines and -OH groups side reactions may start, and this way more or less oligomer molecules may be formed. For example, when reacting three molecules of diamines and two molecules of diepoxy compounds the average molecular mass of adducts will be higher. Since their viscosity grows proportionally with the amount and molecular mass of the oligomers, it is suggested to apply amine excess, or to use so-called active diluent.

Viscosity of adducts according to the invention is maximum 300 mPas at 70 °C, preferably maximum 200 mPas, and especially preferably under 100 mPas. Adducts or mixtures having so low viscosity can be used to prepare primers. Such primers are also within the scope of the invention.

The invention relates also to the use of adducts and adduct blends according to the invention as amine and/or polyol blend components of polyurea (PU) systems, polyurea-polyurethane (PU-PUR), or polyurethane-polyurea (PUR-PU) hybrid systems.

In the amine blends (in the so-called "A" component) instead of 5-100 mass%, preferably 10-50 mass% of the traditional amine, adducts according to the invention are used. Asymmetric adducts are advantageously used: 0-100%, preferably 20-50% of the applied adducts are of asymmetric structure.

Amine epoxy adducts belonging to the scope of the invention can be used together with all di- and polyisocyanates and their mixtures (irrespectively if they belong to the aliphatic, cycloaliphatic, araliphatic or aromatic isocyanates), which have already been used for preparing PU or PUR coatings. For example, especially preferable are the different MDI-based modified isocyanates, MDI based prepolymers, trimerized HDI products, etc.

Adhesive strength of the coatings prepared with adducts according to the invention is better than that of the known coatings: as we show in the examples below, it reaches, even exceeds 15 MPa, preferably 18 MPa, and especially preferably 20 MPa.

Corrosion resistance of the coating systems according to the invention is also excellent, as it will be proven by measurements later.

In the following, the invention will be illustrated by examples, which however, do not limit the scope of invention. We have prepared the samples partly in laboratory (L) scale, partly in large laboratory scale, i.e. in autoclave (A). Adducts with the same composition but made in different scale are assigned differently, since the scale-up means different reaction conditions (dosing time, heat transfer, mixing conditions), therefore, the prepared adducts and adduct blends have more or less different properties.

### Example 1. (comparative)

### Laboratory scale preparation of adduct "MA-0", Nr. 1.

### Starting components:

### 1 mol 1,5-Diamino-2-Methylpentane (MPMD) + 1 mol AH-17

In a traditional open metal can of 700 ml used in lacquer industry with an upper filling hole of 80 mm diameter, 116 g MPMD and 214 g AH-17 are weighed. Under continuous stirring, it is heated up to 60±2°C by an electric basket heater. At this temperature the conversion reached 81% in 1.5 hours, and then, 98.5% conversion has been reached after two more hours at 90±1°C. Reactivity and the consumption of the epoxy groups were monitored by determining amine and epoxy numbers. Average viscosity of the prepared full adduct was 350 ± 20 mPa.s at 20°C, 44 ± 10 mPa.s at 50 °C and 17 ± 5 mPa.s. at 70°C.

The experiment has been repeated with the same parameters, but using a four-neck sulphurizing flask, using the laboratory technique described in Example 2. Viscosity parameters of the adduct have been the same as above within the error limits.

Adduct Nr. 1 does not belong to the scope of the invention, but we prepared and tested if for comparison. This adduct reacts still too quickly with the isocyanates we actually use, similarly to the starting amine, therefore, we did not deal with its polymer variants either.

### Example 2.

### Laboratory scale preparation of adduct "PA 112", Nr. 7.

### Starting components:

### 1 mol Jeffamine D230 + 2 mol AH-17

120 g Jeffamine D230 aliphatic polyether diamine is weighed into a 500 ml four-neck sulphurizing flask equipped with dropping funnel and thermometer, and it is heated to 70±2.5°C by an electric basket heater under intensive, continuous stirring. While keeping the substance, and later the reaction mixture at this temperature for two hours, 222 g 2-etylhexyl glycidyleter is added slowly into the flask within 2 hours under continuous and intensive stirring. Depending on the epoxy content of the reaction mixture it is kept at the prescribed 70±2.5 °C for further 1.5 hours, and at 90±25°C for further 1.5 hours. Reactivity and the consumption of epoxy groups are monitored by determining the amine and epoxy numbers, and after the full consumption of the starting epoxy groups the reaction mixture is cooled down intensively to room temperature. Average viscosity of the prepared **full adduct** is 770 ± 20 mPa.s at 20°C, 80 ± 10 mPa.s at 50°C, 30 ± 5 **mPa.s at 70°C,** amine number: **164** ± 5, epoxy number: 0,0.

### Example 3.

### Laboratory scale preparation of adduct "PA-1.33", Nr. 50.

### Starting components:

### 1 mol AH-P61 + 1 mol Ethacure 100 + 1 mol AH-17

In the first step, 164 g AH-P61, 60 g Ethacure 100 and 2.5% triethanoleamine (as catalyst) are weighed into the 700 ml metal can. Under continuous stirring it is heated up to 135±2°C by an electric basket heater in 1 hour, and it is kept at this temperature for 2.5 hours till the starting epoxy groups are almost completely consumed, i.e. the conversion calculated for the semi-adduct reaches 97%. Reactivity and the decrease of epoxy groups are monitored by determining the amine and epoxy numbers.

To the semi-adduct prepared this way, we added 80 g AH-17 (instead of the necessary 76 g, 5.27% more) to secure that by the end of the reaction Ethacure 100 will react fully. Mixing and heating has been continued at the same temperature for 9 hours. Monitoring of the conversion was he same as for the semi-adduct.

Excess epoxy groups were consumed fully, the amount of residual Ethacure 100 decreased under the required limit, to 0,08%, i.e. related to Ethacure we exceeded the 99.9% conversion. Measured viscosity of the prepared full adduct was 1820 ± 20 mPa.s at 20°C, 195 ± 10 mPa.s at 50°C and 69 ± 5 mPa.s at 70°C.

### Example 4.

### Laboratory scale preparation of adduct "PAE-12", Nr. 48.

### Starting components:

### 1 mol Ethacure 100 + 2 mol AH-P61

27 g Ethacure 100, 4,4 g i.e. 2.5% triethanolamine (catalyst) and 150 g AH-P61 are weighed into a 700 ml metal can. Under continuous stirring it is heated up to 115±5°C in 1 hour by an electric basket heater. After five hours the conversion was 83.5%. After that, the covered can has been placed into a drying chamber and kept there overnight without mixing. By morning it reached 99.4 % conversion. Reactivity and the decrease of epoxy groups are monitored by determining the amine and epoxy numbers.

Viscosity of the prepared full adduct was 835±20 mPa.s at 20°C, 124±10 mPa.s at 50°C and 49±5 mPa.s at 70°C.

### Example 5.

### Laboratory scale preparation of adduct "PA-28", Nr. 15.

### Starting components:

### 1 mol Jeffamin D2000 + 2 mol AH-17

497 g Jeffamin D2000 and 103 g AH-17 are weighed in a 700 ml metal can. Under continuous stirring, by an electric basket heater it is heated up to 110±5°C in 1 hour, and then it is kept at this temperature for 2 hours. At this stage, conversion reached 43%. Raising the temperature to 140±5°C, mixing was continued for further 3.5 hours, till the starting epoxy groups are almost completely consumed, i.e. we reached the 98.7% conversion. Reactivity and the consumption of epoxy groups are monitored by determining the amine and epoxy numbers. Measured viscosity of the prepared full adduct was 884 ± 20 mPa.s at 20°C, 161 ± 10 mPa.s at 50 °C and 73 ± 5 mPa.s at 70°C.

### Example 6.

### Operation instruction

### for the large laboratory scale preparation of adduct "AP-17", Nr. 16. in autoclave (A)

### 1. Equipment

Mixing equipment of stainless construction material with 42 I total volume, with dosing equipment, reflux and submerging cooler and collecting can. Equipment can be heated and cooled.

### 2. Material demand

| | | |
|---|---|---|
| Jeffamine D2000 | 29.80 kg | |
| Eporezit AH-17 | 6.28 kg | (epoxy equivalent: 217) |
| *Total:* | 36.08 kg | |

### 3. Operation steps

- Jeffamine D2000 (29.8 kg) is weighed into the clean and dry equipment.
- Nitrogen is slowly released to the equipment, and the flow is kept till the end of the process.
- Mixer is switched on, and kept working till the end of the process.
- Eporezit AH-17 (6,28 kg) is added.
- The material in the equipment is heated up to 125-130°C in about 1.5 hours.
- Mixing is continued at 125-130°C.
- From the 3^{rd} hour after reaching 125°C, sample is taken from the equipment in every hour to test the epoxy number.
- After 5-6 hours of reaction time over 99% of the calculated conversion for AH-17 is reached.
- After reaching >99.5% conversion the material is cooled down to 60-65°C, and it is removed from the equipment through the discharge valve to the required package.
- 0.5 kg sample is taken from the material.

| **4. Quality of the final product, Batch 1.** | | **Batch 2.** |
|---|---|---|
| Color: straw-colored yellow, transparent, clear. | | Like Batch 1. |
| Viscosity: | 20°C = ~800 mPas | ~840 mPas |
| | 50°C = ~150 mPas | ~156 mPas |
| | 70°C = ~65 mPas | -70 mPas |

When preparing the adducts in Examples 1-6. and in **Tables 5/1-5/4.** the exact weighing has not been carried out on the basis of the theoretical molecular masses but on the actual amine numbers and epoxy equivalents of the used substances.

Typical parameters of the adducts prepared as in Examples 1-6 or similarly are shown in ***Tables 5*/*1*.-*5*/*4*.** For comparison, there are some adducts in the Tables which do not belong to the scope of our invention, because according to the REACH rules they cannot be classified as polymers, and/or their viscosity is more than 300 mPas at 70°C.

***Table 5*/*1.*** shows the properties of adducts prepared from different primary, di- and triamines with monoepoxy compounds. At the upper part of ***Table 5*/*1*** there are only non-polymer classified, and lower mainly polymer-classified adducts are shown, the latter ones belong to the present invention.

***Table 5*/*****2*** shows the viscosity of some adducts and adduct blends prepared from primary monoamines with the same diepoxy active diluents (AH3=butandiol-bisglycidylether) at 50 and 70°C, as well as their REACH classification, and that whether they fall within the scope of the invention. It can be seen that product "MA-01" is outside the scope of the invention for two reasons: first, it is not polymer according to REACH, second, its viscosity is much more that 300 mPas at 70°C. The situation is similar for adducts MA-02 and MA-07, too. Viscosities of MA-09 and MA-15 are still preferable, but since they are not polymers, they are outside the scope. At the bottom part of the Table, the viscosity of "PA" adducts is preferable both by laboratory and autoclave scales, and since they are polymer classified, they are within the scope of the invention.

**Table 5/1.**

| **Adducts made of primary di- and triamines with monoepoxy compounds** | | | | | | |
|---|---|---|---|---|---|---|
| **Adduct number** | **Adduct designation** | **Adduct structure** | **Preparation** | **Viscosity (mPa·s)** | | **REACH classification and scope of claims** |
| | | | | **50°C** | **70°C** | |
| 1.⁺ | MA-0 | 1,5-Diamino-2-methylpentane + AH-17 | L | 44 | 17 | **"NO"** |
| | | M = 1 : 1 | | | | Not polymer |
| 2. | MA-00 | 1,5-Diamino-2-methylpentane + AH-17 | L | 112 | 37 | **"NO"** |
| | | M = 1 : 2 | | | | Not polymer |
| 3. | MA-1 | DDCHM* + AH-17 | L | 506 | 110 | **"NO"** |
| | | M = I : 1 | | | | Not polymer |
| 4. | MA-2 | DDCHM + AH-17 | L | 900 | 189 | **"NO"** |
| | | M = 1 : 2 | | | | Not polymer |
| 5. | MA-4 | DDDCHM** + AH-17 | L | 446 | 95 | **"NO"** |
| | | M = 1 : 1 | | | | Not polymer |
| 6. | MA-5 | DDDCHM + AH-17 | L | 748 | 154 | **"NO"** |
| | | M = 1 : 2 | | | | Not polymer |
| 7. | PA-112 | Jeff. D230 + AH-17 | L | 80 | 30 | Polymer |
| 8. | AP-112 | M = 1 : 2 | A | 76 | 26 | |
| 9. | PA-39 | Jeff D400 + AH-17 | L | 37 | 15 | Polymer |
| 10. | AP-18 | M = 1 : 1 | A | 38 | 16 | |
| 11. | PA-40 | Jeff D400 + AH-17 | L | 88 | 32 | Polymer |
| 12. | AP-19 | M = 1 : 2 | A | 78 | 29 | |
| 13. | PA-27 | Jeff D2000 + AH-17 | L | 130 | 64 | Polymer |
| 14. | AP-10 | M = 1 : 1 | A | 117 | 55 | |
| 15. | PA-28 | Jeff. D2000 + AH-17 | L | 161 | 73 | Polymer |
| 16. | AP-17 | M = 1 : 2 | A | 156 | 70 | |
| 17. | PA-36 | Jeff. T3000 + AH-17 | L | 180 | 85 | **"NO"**, **Two primary** amino groups, Polymer |
| | | M = 1 : 1 | | | | |
| 18. | PA-37 | Jeff. T3000 + AH-17 | | 216 | 96 | **One primary** amino goup, Polymer |
| 19. | AP-23 | M = 1 : 2 | A | 210 | 94 | |
| 20. | PA-38 | Jeff. T3000 + AH-17 | L | 260 | 118 | **Three** secondary amino groups, Polymer |
| 21. | AP-38 | M = 1 : 3 | A | 240 | 105 | |
| 22. | PA-85 | PTHF 350 + AH-17 | L | 130 | 48 | Polymer |
| 23. | AP-85 | M = 1 : 2 | A | 125 | 46 | |
| 24. | PA-95 | 1,3-BAC + AH-17 | L | 208 | 57 | **"NO"** |
| 25. | AP-95 | M = 1 : 2 | A | 205 | 56 | Not polymer |
| 26. | PA-97 | MXDA + AH-17 | L | 171 | 49 | **"NO"** |
| 27. | AP-97 | M = 1 : 2 | A | 146 | 44 | Not polymer |
| 28. | PA-55 | Jeff D400 + AH-24 | L | 46 | 20 | Polymer |
| 29. | AP-20 | M:1:1 | A | 49 | 21 | |
| 30. | PA-5 | leff D2000 + AH-24 | L | 155 | 74 | Polymer |
| 31. | AP-21 | M:1:1 | A | 132 | 63 | |
| 32. | PA-20 | Jeff. D400 + Cardura E | L | 104 | 40 | Polymer |
| | | M = 1 : 1 | | | | |
| 33. | PA-21 | Jeff. D400 + Cardura E | L | 324 | 91 | Polymer |
| | | M = 1 : 2 | | | | |
| 34. | PA-25 | Jeff. D2000 + Cardura E | L | 154 | 69 | Polymer |
| | | M = 1 : 1 | | | | |

| | | | | | | |
|---|---|---|---|---|---|---|
| "NO" = outside the scope of claims. L = prepared in laboratory scale (about 400-600 g) A = prepared in autoclave (about 20-35 kg) * DDCHM = 4,4'-Diamino dicyclohexyl methane = 4,4'-Methylenebis (cyclohexylamine) ** DDDCHM = 4,4'-Diamino 3,3' dimethyl dicyclohexyl methane = 4,4'-Methylenbis (2-methyl-cyclohexylamine) * Theoretical mol mass of adduct Nr. 1. is 302 g/mol, in the practice, due to AH-17 it is usually over 310 g/mol. | | | | | | |

**Table 5/2.**

| Adducts prepared from primary monoamines with butanediol-bisglycidylether type active diluent | | | | | | |
|---|---|---|---|---|---|---|
| **Adduct number** | **Adduct designation** | **Adduct structure** | **Preparation** | **Viscosity (mPa·s)** | | **REACH classification and scope of claims** |
| | | | | **50°C** | **70°C** | |
| 35. | MA-01 | Aniline + AH-3 | L | 5 360 | 810 | **"NO"** |
| | | M = 2 : 1 | | | | Not polymer, η>300 |
| 36. | MA-02 | 2-Ethylaniline + AH-3 | L | 2 910 | 556 | **"NO"** |
| | | M = 2 : 1 | | | | Not polymer, η>300 |
| 37. | MA-07 | Cyclohexylamine + AH-3 | L | 6440 | 985 | **"NO"** |
| | | M=2:1 | | | | Not polymer, η>300 |
| 38. | MA-09 | 1,1,3,3- Tetramethylbutylamine + | L | 215 | 62 | **"NO"** |
| | | AH-3, M = 2 : 1 | | | | Not polymer |
| 39. | MA-015 | (Cyclohexylamine + AH-17) + AH-3 | L | 170 | 52 | **"NO"** |
| | | M = 2 : 2 : 1 | | | | Not polymer |
| 40. | PA-44 | Jeff. M600 + AH-3 | L | 125 | 54 | Polymer |
| | | | | | | |
| 41. | PA-02 | (Jeff. M600 + AH-3) + 2-Ethylaniline, M = 1: 1 : 1 | L | 470 | 181 | Polymer |
| 42. | PA-110 | Jeff. M600 + AH-3 + 2,6-Diethylaniline, M = 1 : 1 : 1 | L | 237 | 89 | Polymer |
| 43. | PA-03 | (Jeff. M600 + AH-3) + Cyclohexylamine | L | 361 | 133 | Polymer |
| | | M = 1 : 1 : 1 | | | | |
| 44. | PA-04 | (Jeff. M600 + AH-3) + 2-Methyl-cyclohexylamin | L | 168 | 71 | Polymer |
| | | M = 1 : 1 : 1 | | | | |
| 45. | PA-05 | (Jeff. M600 + AH-3) + 1,1,3,3,-Tetramethylbutylamine | L | 140 | 57 | Polymer |
| | | M = 1 : 1 : 1 | | | | |

| | | | | | | |
|---|---|---|---|---|---|---|
| **"NO" = outside the scope of claims.** L = prepared in laboratory scale (about 400-600 g) A = prepared in autoclave (about 20-35 kg) | | | | | | |

**Table 5/3.**

| **Adducts prepared from primary, secondary, mono- and diamines, and from different mono- and diepoxy compounds** | | | | | | |
|---|---|---|---|---|---|---|
| **Adduct number** | **Adduct designation** | **Adduct structure** | **Preparation** | **VISCOSITY (mPa·s)** | | **REACH classification and scope of claims** |
| | | | | **50°C** | **70°C** | |
| 46. | PAE-1.37 | Ethacure 100 + AH-P61 | L | 113 | 42 | Polymer |
| 47. | AP-7 | M = 1 : 1 | A | 100 | 38 | |
| **48.** | PAE-12 | Ethacure 100 + AH-P61 | L | 124 | 49 | Polymer |
| 49. | APE-12 | M = 1 : 2 | A | 92 | 40 | |
| **50.** | PAE-1.33 | AH-P61 + Ethacure 100 + AH7 | L | 195 | 69 | Polymer |
| 51. | AP-5 | M = 1 : 1 : 1 | A | 129 | 48 | |
| 52. | PAE-1.36 | (Ethacure 100+AH17) + Epilox M985 | L | 1 030 | 282 | Polymer |
| | | M = (2 : 2) : 1 | | | | |
| 53. | PAE-1.47 | Jeff. M600 + AH3 + Ethacure 100 | L | 615 | 204 | Polymer |
| 54. | AP-8 | M = 1 : 1 : 1 | A | 484 | 161 | |
| 55. | PAE-1.35 | Jeff. T3000 + AH-17 + Ethacure 100 + AH-3 | L | 844 | 334 | **"NO"** |
| | | M = 1 : 2 : 1 : 1 | | | | Polymer η>300 |
| 56. | 1.10.01 | Jeff. D230 + AH18 | L | 150 | 388 | **"NO"** |
| | | M=2: 1 | | | | Polymer η>300 |
| 57. | 1.12.01 | Jeff. D400 + AH18 | L | 360 | 182 | Polymer |
| | | M = 2 : 1 | | | | |
| 58. | 1.13.01 | Jeff. D2000 + AH18 | L | 438 | 200 | Polymer |
| | | M = 2 : 1 | | | | |
| 59. | PA-1 | Jeff. D2000 + pH18 + Jeff. M600 | L | 632 | 278 | Polymer |
| | | M = 1 : 1 : | | | | |
| 60. | 1.23 | Jeff. SD2001 + AH18 + Jeff. SD2001 | L | 76 | 39 | Polymer |
| | | M = 2 : 1 | | | | |
| 61. | 1.21 | Jeff. SD231 + DER354 + Jeff. SD231 | L | 230 | 72 | Polymer |
| | | M = 2 : 1 | | | | |
| 62. | PA-33 | Epicote 828 + Jeff. M600 | L | 514 | 173 | Polymer |
| | | M = 1 : 2 | | | | |
| 63. | PA-32 | DER 354 + Jeff M600 | L | 324 | 119 | Polymer |
| | | M = 1 : 2 | | | | |
| 64. | PA-34 | Epicote 1001 + Jeff. M600 | L | 19 000 | 3620 | **"NO"** |
| | | M = 1 : 2 | | | | Polymer η>300 |
| 65. | PA-35 | Epicote 1004 + Jeff. M600 | L | >100000 | 65 400 | **"NO"** |
| | | M = 1 : 2 | | | | Polymer η>300 |

| | | | | | | |
|---|---|---|---|---|---|---|
| **"NO" = outside the scope of claims.** L = prepared in laboratory scale (about 400-600 g) A = prepared in autoclave (about 20-35 kg) | | | | | | |

**Table 5/4.**

| **Some amine-epoxy adducts and adduct blends disclosed inHU P0900532 Hungarian patent application, complemented by data of autoclave versions prepared later** | | | | | | | |
|---|---|---|---|---|---|---|---|
| **Adduct number** | **Adduct new designation** | **Adduct original designation** | **Adduct starting compounds, their mol ratio and role** | **Preparation** | **Viscosity (mPa.s)** | | **REACH classification and scope of claims** |
| | | | | | **50°C** | **70°C** | |
| 66. | - | APR/1.* | Jeff D2000 + AH-5 | L | 110 | | Polymer |
| | | | M = 1 : 1 | | | | |
| 67. | - | APR/5. | Jeff T3000 + AH-7 | L | 710 | | Polymer |
| | | | M- 1 : 2 | | | | |
| 68.⁺ | - | APR/6. | Jeff T5000 + AH-24 | L | 520 | | Polymer |
| | | | M= 1 : 2 | | | | |
| 69. | AP-2 | - | Jeff M600 + AH-18 + Jeff. D2000 | A | 632 | 278 | Polymer |
| | | | M = 1 : 1 : 1 | | | | |
| 70. | AP-3 | AP/2. | Ethacure 100 + AH-3 + Jeff D2000 | A | 10 800 | 2700 | **NO"** |
| | | | M = 1 : 1 : 1 | | | | η>300 Polymer |
| 71. | APE-12 f | AP/4. | Ethacure 100 + AH-P61 | A | 92 | 40 | Polymer |
| | | | M = 1 : 2 | | | | |
| 72. | | AP/5. | Ethacure 100 (+ AH-17) + Epilox M985 | A | 130 | 50 | Polymer |
| | | | M=2 | | | | |
| 73. | | AP/6. | Jeff. D2000 + AH-18 | A | 430 | 190 | Polymer |
| | | | M = 2 : 1 | | | | |
| 74. | | AP/7. | Jeff. M600 + AH-18 + Jeff. ED900 | A | 530 | | Polymer |
| | | | M = 1 : 1 : 1 | | | | |
| 75. | | AP/11. | Jeff M2005 + Epicote 1004 | A | 14 800 | > 1.000 | **"NO"** |
| | | | M-2 1 | | | | η>300 |
| 76. | A-4 | AP/18. | Jeff. M600 + AH-18 + Ethacure 100 | A | 440 | 159 | Polymer |
| | | | M = 1 : 1 : 1 | | | | |
| 77. | A-5 | | Ethacure 100 + AH-18 | A | 910 | 258 | **"NO"** |
| | | | M = 2 : 1 | | | | |
| | | | + 0 32 mol Jeff D2000 sol vent, added later on! | | | | Not polymer |

| | | | | | | | |
|---|---|---|---|---|---|---|---|
| * APR = adduct classified as a polymer, where di- or tnammes are only partly reacted with monoepoxy ** AP = adduct classified as a polymer ⁺ Average mol mass of adduct **Nr. 68.** is ~6 338 g/mol, the highest among the examples *M̅ₙ̅* values of the adducts of the other examples are between the mol masses of adducts Nr. 1. and Nr 68 | | | | | | | |

Adducts being printed with gray background in ***Tables 5*/*1, 5*/*2, 5*/*3 and 5*/*4*** have been prepared in autoclave We have sprayed PU coatings with these adducts. their composition and the obtained results are shown in ***Tables 6*/*1-6*/*4.* In** the formulations in ***Tables 6*/*1 6*/*4.*** the adducts according to the invention served as substitutes for a part = (10-70 mass%) of the amine blend in the "A" ("POLY") component of the PU systems

In the upper part of ***Tables 6.1 6.4*** the traditional, commercially available amine components of the "A" components (amine blends) are given in bold Below them, the new amine-epoxy adducts according to the invention, then one or more of the isocyanate components, used as "B" (i.e. "ISO") component are listed. Furthermore, the gel times of the homogenized A+B components, and the mechanical strength properties of the coatings are shown.

The solvent- free gel time given here is not identical with gel time in industrial practice, which is usually measured on a vertical surface with a coating material sprayed on one single spot for some seconds, measuring the fluid period by stopwatch. This gel time has been obtained according to the Polinvent (PI) internal standard, defining a new laboratory gel time measuring method worked out by the inventors. Laboratory gel time shown in *Tables 6.* is measured as follows:

### ■ Solvent test:

In the course of the test, in all cases, the gel time of a solution made of 4 ml polyurea (PU) product and 10 ml xylene or toluene (which is equivalent to a 66 m/m % solvent amount) has been measured at room temperature in a 100 ml PP beaker. Polyamine and isocyanate components had been dissolved in 5 ml xylene each before weighing together. Simultaneously with the weighing of the two dissolved components, the 20 seconds mixing was started. We defined the time elapsed between the start of mixing and the standstill of the polyurea fluid gel (with 90° slue) to be solvent gel time, given in minutes [min].

### (Space-time coordinates of the mixed air bubbles strongly help the perception of non-moving).

### ■ Solvent-free test:

If the system with 66 m/m% solvent content produces gel slowly, then the measurement of PU gel time is carried out without adding solvents, the result is given in seconds [sec].

Finally, at the bottom of Tables 6. the adhesive strength values of the coatings are given, using metal sheets with identical surface roughness.

As reference values for the spray tests, we applied the suggested formulations in the product description of the raw material producer Huntsman (HRef. 1. and HRef. 2.), as well as a DRef. 1 formulation which can be considered as a PU-PUR copolymer system (most raw materials of that are produced by Dow).

For the spray tests we applied a GlasCraft Guardian A6-6000 type PU reactor from Graco, with 3 and 6 m hoses, 1:1 mass ratio, by the original 23940-XX Probler P2 Elite Dispense Gun type spraying gun, preparing 1.5 mm thick coatings in average, on thoroughly cleaned steel plates with a size of 0,5x20x40 cm. Since the spray process needs at least 10 litres of POLY and ISO components each, the large laboratory scale adducts have been used for the spray tests. The pre-treatment of the steel plates has been carried out by CLEMCO BNP 720 DS machine and tip 6, operated by compressed air (5 bar pressure). Immediately before the grit blasting procedure we filled F40 designated corundum grains (354-500 µm grain size) into the machine. On the round table serving as working surface of the grit blasting chamber we placed 4 steel plates simultaneously. After grit blasting, we measured the surface roughness at 3 spots each on the steel plates by a Taylor-Hobson Surtronic 10 type roughness measurement device, and registered the values in the protocol.

After the PU spraying the adhesion strength has been measured on these steel plates, while most of the mechanical properties have been measured on specimens being cut out from PU coatings applied to polypropylene sheets, and removed later on.

**Table 6.1.**

| **Composition, some properties and adhesive strength of PU coatings sprayed on grit blast roughened steel plates** | | | | | | | | | | |
|---|---|---|---|---|---|---|---|---|---|---|
| Formulaition number | | ***Href1*** | ***Href2*** | F83 | F84 | F85 | F86 | F92 | F93 | F103 |
| POLY COMPOSITION (%) | **JT5000** | ***0*** | ***0*** | **10** | **10** | **10** | **10** | **0** | **0** | **0** |
| | **JT3000** | ***0*** | ***0*** | **0** | **0** | **0** | **0** | **0** | **0** | **0** |
| | **JD2000** | ***68,5*** | ***68,5*** | **0** | **0** | **0** | **0** | **30** | **30** | **30** |
| | **Eth.100** | ***19*** | ***19*** | **10** | **10** | **10** | **10** | **0** | **0** | **0** |
| | **Eth. 420** | ***12,5*** | ***12,5*** | **30** | **30** | **30** | **30** | **30** | **30** | **30** |
| | **Jeff. 754** | ***0*** | ***0*** | **10** | **10** | **10** | **10** | **10** | **10** | **10** |
| | AP-7 | *0* | *0* | 0 | 0 | 0 | 0 | 30 | 0 | 30 |
| | AP-8 | *0* | *0* | 0 | 0 | 0 | 0 | 0 | 30 | 0 |
| | AP-10 | *0* | *0* | 40 | 0 | 0 | 0 | 0 | 0 | 0 |
| | AP-17 | *0* | *0* | 0 | 40 | 0 | 0 | 0 | 0 | 0 |
| | AP-18 | *0* | *0* | 0 | 0 | 40 | 0 | 0 | 0 | 0 |
| | AP-19 | *0* | *0* | 0 | 0 | 0 | 40 | 0 | 0 | 0 |
| | AP-20 | *0* | *0* | 0 | 0 | 0 | 0 | 0 | 0 | 0 |
| | AP-21 | *0* | *0* | 0 | 0 | 0 | 0 | 0 | 0 | 0 |
| | AP-23 | *0* | *0* | 0 | 0 | 0 | 0 | 0 | 0 | 0 |
| | AP-85 | *0* | *0* | 0 | 0 | 0 | 0 | 0 | 0 | 0 |
| | AP-95 | *0* | *0* | 0 | 0 | 0 | 0 | 0 | 0 | 0 |
| | AP-97 | *0* | *0* | 0 | 0 | 0 | 0 | 0 | 0 | 0 |
| | AP-112 | *0* | *0* | 0 | 0 | 0 | 0 | 0 | 0 | 0 |
| ISO composition (%) | S2054 | **100** | 0 | 0 | 0 | 0 | 0 | 0 | 0 | **100** |
| | **S2067** | 0 | **100** | **100** | **100** | **100** | **100** | **100** | **100** | 0 |
| | | | | | | | | | | |
| ***Gel time in solvent [min]*** | | ***3-3,5*** | ***2*** | ***8*** | **8,5** | immediately 100% gel | **7,5** | **> 3 h** | ***22*** | **> 3 h** |
| **Solvent free gel time [sec]** | | 5-7 | 3-5 | **10-15** | **10-15** | - | **7-10** | **30** | 15 | **40** |
| Tensile strength [MPa] | | 24,4 | 23,8 | 200 | 21,8 | | 18,2 | 19,4 | 18,1 | 174 |
| Ultimate elongation [%] | | 422,9 | 154,2 | 117,1 | 136,7 | | 13,8 | 128,2 | 66,7 | 443,3 |
| **Adhesive strength [MPa]** | | **6,7** | **14,8** | **19,1** | **>20** | **Uncertain** | **17,5** | **>20** | **>20** | **10,7** |

**Table 6/2.**

| Formulation number | | F109 | F110 | F111 | F114 | F123 | F124 | F128 | F135 | F136 |
|---|---|---|---|---|---|---|---|---|---|---|
| POLY composition (%) | **JT5000** | 0 | **10** | 0 | 0 | **30** | **30** | 0 | 0 | 0 |
| | **JT3000** | 0 | **0** | 0 | 0 | 0 | 0 | 0 | 0 | 0 |
| | **JD2000** | **62** | **48** | **62** | **62** | 0 | 0 | **62** | **30** | **30** |
| | **Eth.100** | **17** | **13** | **17** | **17** | **22** | **22** | **17** | **22** | **19** |
| | **Eth. 420** | **11** | **9** | **11** | **11** | **8** | **8** | **11** | **8** | **8** |
| | **Jeff. 754** | 0 | 0 | 0 | 0 | **10** | **10** | 0 | **10** | **10** |
| | AP-7 | 0 | 0 | 0 | 0 | 0 | 0 | 0 | 0 | 0 |
| | AP 8 | 0 | 0 | 0 | 0 | 0 | 0 | 0 | 0 | 0 |
| | AP-10 | 0 | 0 | 0 | 0 | 30 | 0 | 0 | 0 | 0 |
| | AP-17 | 0 | 0 | 0 | 0 | 0 | 0 | 0 | 0 | 0 |
| | AP-18 | 0 | 0 | 0 | 0 | 0 | 0 | 0 | 0 | 0 |
| | AP-19 | 0 | 0 | 0 | 0 | 0 | 30 | 0 | 0 | 0 |
| | AP-20 | 10 | 30 | 0 | 0 | 0 | 0 | 0 | 0 | 0 |
| | AP-21 | 0 | 0 | 10 | 0 | 0 | 0 | 0 | 0 | 0 |
| | AP-23 | 0 | 0 | 0 | 10 | 0 | 0 | 0 | 30 | 33 |
| | AP-85 | 0 | 0 | 0 | 0 | 0 | 0 | 10 | 0 | 0 |
| | AP-95 | 0 | 0 | 0 | 0 | 0 | 0 | 0 | 0 | 0 |
| | AP-97 | 0 | 0 | 0 | 0 | 0 | 0 | 0 | 0 | 0 |
| | AP-112 | 0 | 0 | 0 | 0 | 0 | 0 | 0 | 0 | 0 |
| ISO composition(%) | S2054 | **100** | **100** | **100** | **100** | 0 | 0 | **100** | 0 | 0 |
| | **S2067** | 0 | 0 | 0 | 0 | **100** | **100** | 0 | **100** | **100** |
| | | | | | | | | | | |
| ***Gel time in solvent [mm]*** | | ***4*** | **5,5** | **4,5** | **1,5** | **1** | ***0,5-1*** | **3** | ***0.5*** | ***0,5-1*** |
| **Solvent-free gel time [sec]** | | 5-7 | - | - | 35 | - | - | 5-7 | - | - |
| Tensile strength [MPa] | | 24,8 | 20,3 | 25,7 | 25,5 | 20,0 | 19,1 | 23,5 | 20,3 | 21,4 |
| Ultimate elongation [%] | | 387,8 | 344,3 | 397,2 | 349,7 | 118,0 | 88,9 | 350,3 | 124,8 | 86,6 |
| **Adhesive strength [MPa]** | | **8,9** | **10,3** | **10,6** | **9,3** | **19,3** | **14,5** | **10,3** | **19,3** | **>20** |

**Table 6/3.**

| Formulation number | | F137 | F138 | F139 | F141 | F143 | F145 | F149 | F151 | F160 |
|---|---|---|---|---|---|---|---|---|---|---|
| POLY composition (%) | **JT5000** | 0 | 0 | 0 | 0 | 0 | 0 | 0 | 0 | 0 |
| | **JT3000** | 0 | 0 | 0 | 0 | 0 | 0 | 0 | 0 | 0 |
| | **JD2000** | **0** | **0** | **62** | **62** | **30** | **30** | 0 | 0 | 0 |
| | **Eth.100** | **19** | **19** | **17** | **17** | **10** | **10** | **10** | **10** | 0 |
| | **Eth 420** | **8** | **8** | **11** | **11** | **20** | **20** | **20** | **25** | **60** |
| | **Jeff 754** | **10** | **10** | 0 | 0 | **10** | **10** | 0 | 0 | 0 |
| | AP-7 | 0 | 0 | 0 | 0 | 0 | 0 | 0 | 0 | 0 |
| | AP-8 | 0 | 0 | 0 | 0 | 0 | 0 | 0 | 0 | 0 |
| | AP-10 | 0 | 0 | 0 | 0 | 0 | 0 | 0 | 0 | 0 |
| | AP-17 | 30 | 30 | 0 | 0 | 0 | 0 | 0 | 0 | 0 |
| | AP-18 | 0 | 0 | 0 | 0 | 0 | 0 | 0 | 0 | 0 |
| | AP-19 | 0 | 0 | 0 | 0 | 0 | 0 | 0 | 65 | 0 |
| | AP-20 | 0 | 0 | 0 | 0 | 0 | 0 | 0 | 0 | 0 |
| | AP-21 | 0 | 0 | 0 | 0 | 0 | 0 | 0 | 0 | 0 |
| | AP-23 | 33 | 33 | 0 | 0 | 0 | 0 | 0 | 0 | 0 |
| | AP 85 | 0 | 0 | 0 | 0 | 0 | 0 | 0 | 0 | 0 |
| | AP-95 | 0 | 0 | 10 | 0 | 30 | 0 | 0 | 0 | 0 |
| | AP-97 | 0 | 0 | 0 | 10 | 0 | 30 | 0 | 0 | 0 |
| | AP-112 | 0 | 0 | 0 | 0 | 0 | 0 | 70 | 0 | 40 |
| ISO composition (%) | S2054 | 0 | 100 | 100 | 100 | 0 | 0 | 0 | 0 | 0 |
| | **S2067** | **100** | **0** | **0** | **0** | **100** | **100** | **100** | **100** | **100** |
| | | | | | | | | | | |
| ***Gel time in solvent [min]*** | | ***0,5-1*** | **2,5-3** | **3,5** | **5** | **4,5** | **5** | **15** | **11** | - |
| **Solvent-free gel time [sec]** | | - | - | - | - | | | 10 | 10 | 50 |
| Tensile strength [MPa] | | 204 | 22,1 | 21,9 | 22,8 | 18,6 | 16,3 | 16,6 | 20,4 | 18,1 |
| Ultimate elongation [%] | | 960 | 346,9 | 385,8 | 396,4 | 48,2 | 64,7 | 44,6 | 113 6 | 14,1 |
| **Adhesive strength [MPa]** | | **19,3** | **13,5** | **10,2** | **10,4** | **13** | **14,5** | **14,9** | **17,5** | **15,5** |

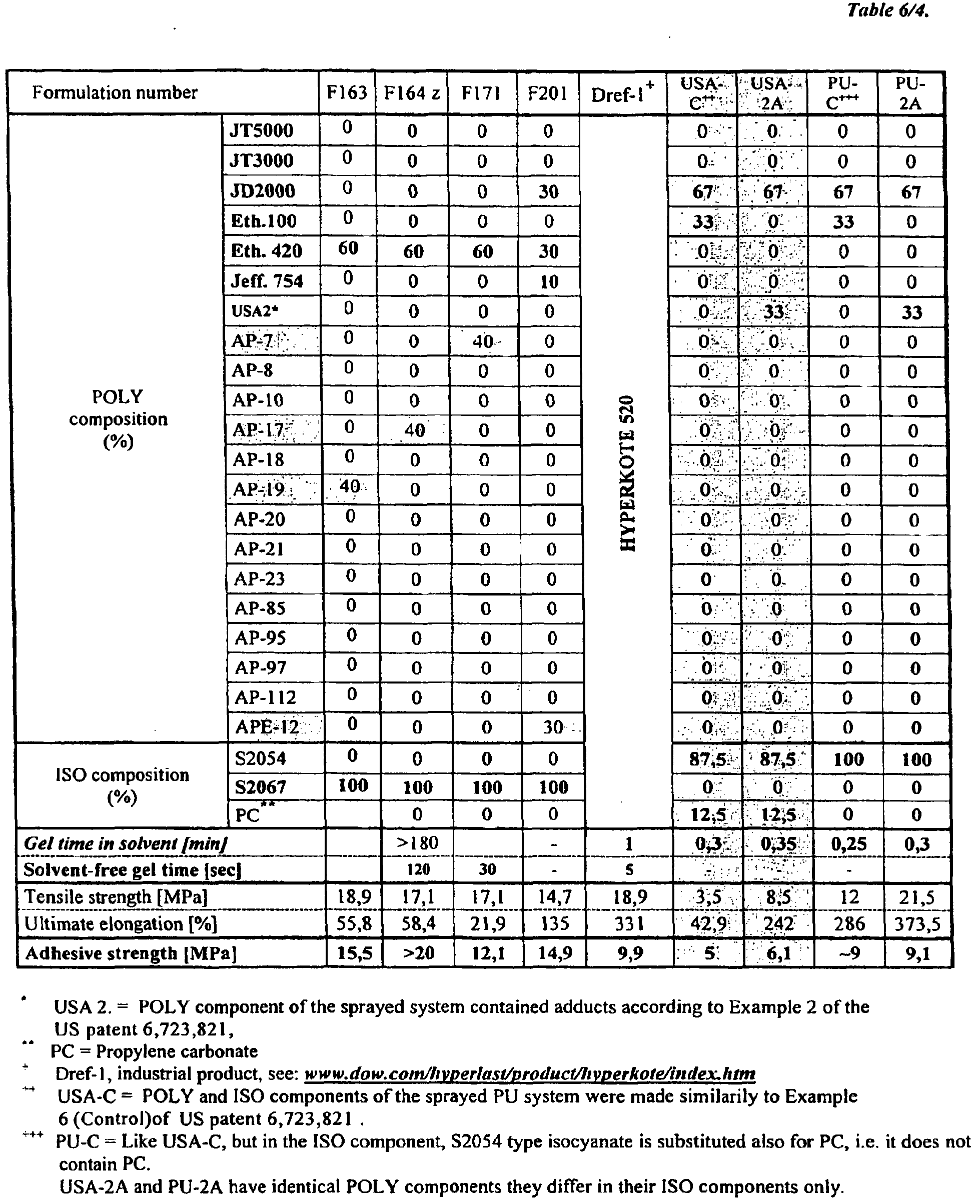

In ***Table 6.1*** the formulations Href 1 and Href 2 differ in their isocyanate components only. The tensile strength values of these reference coatings are nearly the same, their ultimate elongations are, however, very different, because the S 2067 type (Suprasec 2067^{®} brand name) isocyanate provides more dense network. Mainly due to its lower ultimate elongation, this coating has about twice as much adhesive strength as Href 1.

Comparing the data in ***Tables 6*/*1-6*/*4*** it can be seen that this tendency always prevails for both coatings with different isocyanates but otherwise identical "POLY" compositions. It is also shown that coatings prepared with many adducts exhibit considerably higher adhesion than the reference compositions, especially if they are applied in a ratio over 10 %. Another important advantage is that we are able to regulate (i.e. increase) both the solvent and solvent-free gel time in a wide range.

The adducts described in US 6,723,821 patent aimed at improving the PU coatings which are suitable to protect concrete surfaces. In the introduction partwe mentioned already that these coatings do not adhere to metal surfaces satisfactorily. As it can be seen in Table 6/4, columns USA-C and USA-2A, if the coatings of the cited US document are prepared on the same way as the other coatings according to the present invention (i.e. the same roughening, same steel plates, sprayed with the same reactor and same gun), the adhesion of the reference (control) coating was 5 N/mm², and the coating containing the adduct according to Examle 2 of the cited document has a somewhat better, 6.1 N/mm² adhesion strength. Both are lagging behind the usually expected 8 N/mm². The most important reason of this result was that the ISO component contained 12,5% of PC, i.e. propylene carbonate as diluent. The PC molecules which will remain back to a great extent unreacted in the coating will worsen the adhesion, decrease the tensile strength, and increase the ultimate elongation, i.e. they act as plasticizers.

If we use the the isocyanate component instead of the PC (see PU-C and PU-2A columns in Table 6/4) adhesion and other mechanical properties are much more favorable. However, it can also be seen that the coating which contains a large amount of the adduct according to Example 2 (there are 33% in the POLY component) do not provide higher adhesion on steel surface than the adduct-free (and PC-free) PU-C, i.e. control coating. Its reason is presumably that for the preparation of the adduct according to Example 2, a considerable excess of Ethacure 100 was used, more specifically: instead of the equimolar ratio of 2:1, a ratio of 6.3:1 was used. Consequently, the actual adduct concentration in the "POLY" component was only 16.1%, instead of 33%.

We do not wish to bind the explanation of the above results to any theory, but we do think that the increase in adhesive strength which can be achieved by the amine-epoxy adducts according to the invention can be attributed mainly to the hydrogen bridges. Such bridges are formed by the hydroxyl groups with different surfaces, including the metal surfaces. One way for the hydroxyl groups to get into the molecules is that they are already there in certain epoxy resins. On the other hand, in the course of the addition reaction between the epoxy compound and the amino compound the epoxy group opens up and an alcoholic hydroxyl group is formed. Furthermore, hydroxyl groups can be brought in by amino-alcohols as well. It is known from the works: Flexible Polyurethane Foams, 2. edition, ed. R. Herrington and K. Hock, Dow Chemical Company, Midland, MI, USA (1977) and W. D. Vilar, Chemistry and Technology of Polyurethanes, 3. edition, Vilar Poliuretanos Ltd., Lugoa, Rio de Janeiro (2002), that amino groups are willing to react with isocyanate groups by orders of magnitude quicker than hydroxyl groups are. Therefore, in PU systems, in the course of the reaction with the isocyanates (chain growth and polymerization) a high ratio of the hydroxyl groups remains back unreacted, and this way they are able to create hydrogen bridges.

Based on the US 6,723,821 patent description which was already referred to, one would expect that the more hydroxyl groups are present, the higher adhesion strength can be achieved. In contrast to that, we surprizingly observed that it was not worth attempting to reach a maximum of hydroxyl number. Our explanation for that is that the substituted urea bonds which are created in the reaction with the isocyanate group, are also able to form hydrogen bridges in the necessary amount and quality. When reaching the best adhesion values, presumably complex and chelate bonds are formed being related to the simultaneous presence of hydroxyl and substituted urea groups.

We note that the lower hydroxyl group number compared to the adducts made of the usual lacquer industry epoxy resins plays, in the case of metal coatings, a role (by improving the adhesive strength and by decreasing water absorption) also in the excellent corrosion resistance of the coatings according to the invention.

### Testing of corrosion resistance

Corrosion protection of cast iron and steel pipes of different diameter is an especially demanding task. The DIN EN 10290 standard contains the test methods for their external coatings. One of these tests is the cathodic disbondment test. The results of such tests are given in ***Table 7.***

**Table 7.**

| **Cathodic disbondment tests⁺** | | | | |
|---|---|---|---|---|
| ***Test number*** | ***Type*** | ***(60* ± *2)°C, 2 days Average and standard deviadon, mm*** | ***(23* ± *2)°C, 28 days Average and standard deviation, mm*** | ***Assessment*** |
| 1. | F84/1 | 3,4±0,4 | 4,6±0,8 | good |
| 2. | F84/2 | 2,9±1,9 | 3,5±0,3 | good |
| 3. | F84 + HRef2 | 1,9±0,2 | 3,1±0,4 | good |
| 4. | F92 | 3,9±0.4 | 5,5±1,8 | good |
| 5. | F93 | 3,4±0,2 | 5,9±2,4 | good |
| 6. | F164 | 3,8±0,5 | 3,9±0,7 | good |

| | | | | |
|---|---|---|---|---|
| *The average values and standard deviation were calculated from 4 parallel tests.* | | | | |

The data in ***Table* 7** show that the tested coatings more than fulfilled the standard requirements in all cases (suitable under 8 mm). The relatively quick measurements at 60°C showed somewhat more favorable picture, they are suitable for quick control, but they correlate well with the room temperature tests which are more time consuming..

The data in series 3 show that, when we sprayed a primer layer first, and then applied the tradition HRef 2. thick coating, the corrosion resistance became especially good.

***Table 8*** shows that, using the so-called solvent laboratory gel time measurement, we can simply characterize the differences in reactivities of different adducts and amines which have been commercially available already, we can set the order of those. Using this method, the efficiency of designing formulations, the so-called formulating can be considerably improved.

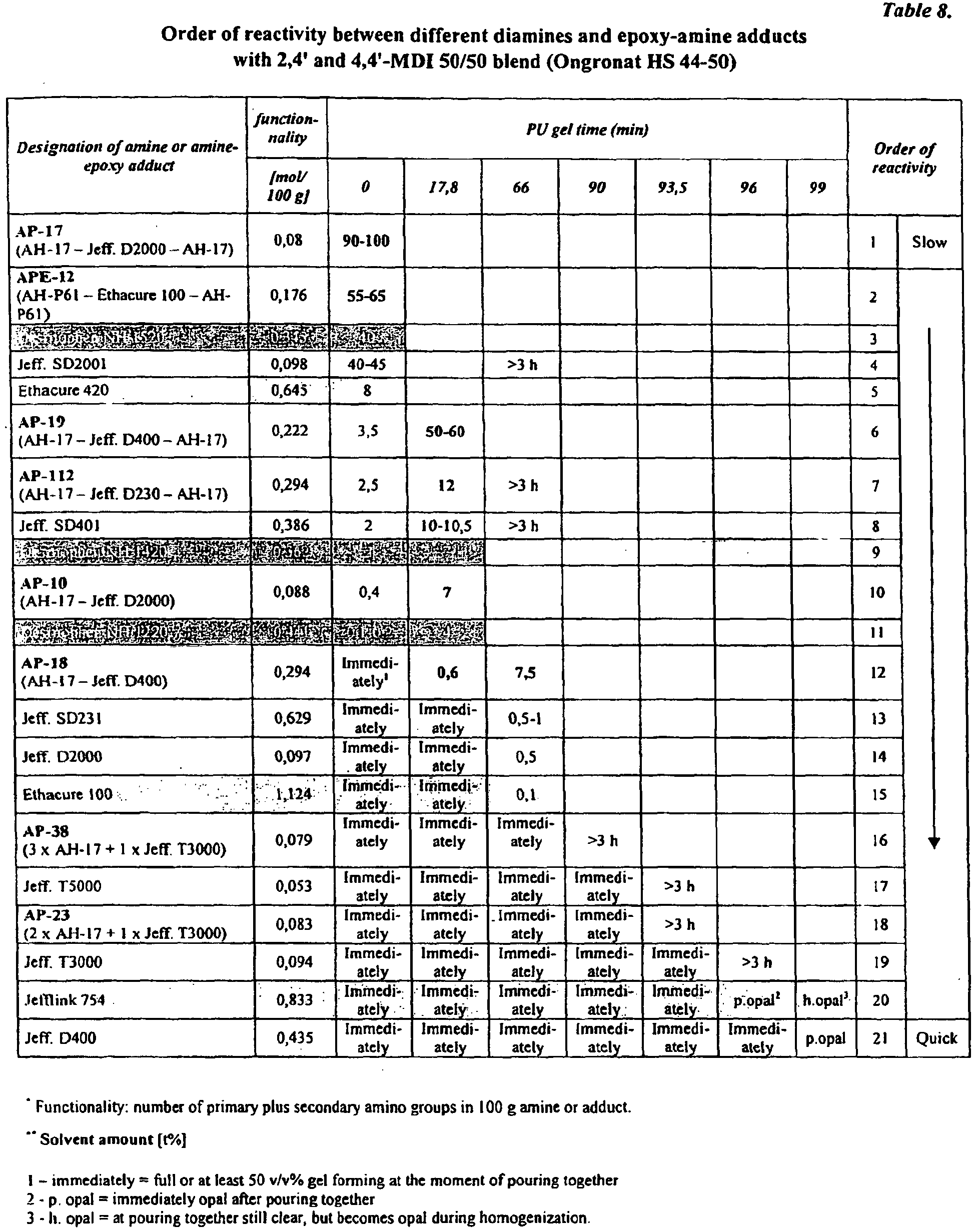

Summarizing, it can be stated that by using the new adducts:
- adhesive strength values have been improved compared to the reference material measurably, and in some cases, radically,
- according to the corrosion resistance data in Table 7, the systems with good or very good adhesion strength have considerably better corrosion resistance that the limit value according to DIN EN 10290,
- Pot life values and mechanical properties of the coatings can be regulated in wide ranges to meet the requirements well and better, than without the adducts according to the invention.

Using the new adducts, the formulating companies get access to excellent new amines, which may economically further improve the assortment and application fields of the PU coatings by their favorable environmental properties.

## Claims

1. Amine-epoxy adducts with symmetrical and asymmetrical structures based on one hand on aliphatic, cycloaliphatic, araliphatic or aromatic mono-, di- and triamines, and on the other hand on aliphatic, cycloaliphatic and aromatic, mono-, di- or polyepoxy compounds, having an average molecular mass ( *M̅ₙ̅ )* of more than 300, but less than 8000, preferably less than 6000, containing at least one, preferably on an average more than one alcoholic hydroxyl group per molecule which is formed in the course of the epoxy-amine reaction, **characterized in that** they contain at least two amino groups per molecule being able to react with isocyanate groups, among those maximum one is primary amine, and that the adduct molecules are of polymeric character and their viscosity is ≤300 mPas at 70°C.

2. The adducts according to Claim 1, **characterized in that** they do not contain any primary amino group.

3. The adducts according to Claim 1 or 2, **characterized in that** their viscosity at 70 °C is not more than 100 mPas.

4. The adducts according to any of Claims 1 to 3, **characterized in that** the starting epoxy compounds are low-viscosity mono-, di- or polyepoxy compounds, i.e. active diluents or epoxy resins containing active diluent.

5. A process for preparing an adduct according to any of Claims 1 to 4, **characterized in that** the starting amino and epoxy compound(s) are mixed in equimolar amount, or maximum 50 mol% amine excess is applied, and the mixture is heated till the complete reaction of the epoxy groups.

6. The process according to Claim 5, **characterized in that** the starting amino and/or epoxy compounds are classified as polymers.

7. The process according to Claim 6, **characterized in that** the reaction is carried out in more than one, preferably in two steps, wherein
a) in the first step a di- or polyepoxy compound is reacted with monoamine, and in the second step the obtained product is reacted with another mono- or diamine, or
b) in the first step a primary di- or polyamine is reacted with a monoepoxy compound, and the obtained product is reacted with another mono- or diepoxy compound.

8. The process according to any of Claims 5 to 7, **characterized in that** when one or more starting amines are hazardous for the environment and/or for health, the reaction is continued until the ratio of the especially hazardous one or more starting amine remaining in the final amine-epoxy adduct decreases under 0.1 % by mass.

9. The process according to any of Claims 5 to 8, **characterized in that** the starting amine and/or secondary diamine active diluent is used in an excess of maximum 50 mol%, preferably maximum 30 mol%, which is left in the product as a diluent.

10. Use of the adduct(s) or adduct blend(s) according to any of Claims 1 to 4 or produced by any of Claims 5 to 9, alone or in combination with other amine(s) as amine blend component(s) in hot sprayed polyurea systems.

11. Use of the adduct(s) or adduct blend(s) according to any of Claims I to 4 or produced by any of Claims 5 to 9, alone or in combination with other amine(s) and/or polyol(s) used in PUR chemistry, as components in the so-called polyol blends of hot sprayed hybrid PU-PUR or PUR-PU coating systems.

12. The use according to Claim 10 or 11, where the adduct(s) is(are) used in 5-100%, preferably in 10-50% related to the total amine mass in the amine or amine-polyol blends.

13. The use of the adduct according to Claim 3 for the preparation of hot sprayed PU primer.

14. The use according to Claim 13, where the adduct is used in at least 20%, preferably at least 50% related to the total amine mass in the amine blend.

## Patentansprüche

1. Amin-Epoxid-Addukte mit symmetrischen und asymmetrischen Strukturen, die einerseits auf aliphatischen, cycloaliphatischen, araliphatischen oder aromatischen Mono-, Di- und Triaminen basieren und andererseits auf aliphatischen, cycloaliphatischen und aromatischen Mono-, Di- oder Polyepoxidverbindungen basieren, eine durchschnittliche Molekülmasse ( *M̅ₙ̅* ) von mehr als 300 aber weniger als 8000, vorzugsweise weniger als 6000 aufweisen, wenigstens eine, vorzugsweise im Durchschnitt mehr als eine im Verlauf der Epoxid-Amin-Reaktion gebildete alkoholische Hydroxylgruppe pro Molekül umfassen, **dadurch gekennzeichnet, dass** sie wenigstens zwei Aminogruppen pro Molekül umfassen, wobei höchstens eine davon ein primäres Amin ist, und die zur Reaktion mit Isocyanatgruppen in der Lage sind, und dass die Adduktmoleküle einen polymeren Charakter aufweisen und ihre Viskosität ≤ 300 mPas bei 70 °C beträgt.

2. Addukte nach Anspruch 1, **dadurch gekennzeichnet, dass** sie keine primäre Aminogruppe umfassen.

3. Addukte nach Anspruch 1 oder 2, **dadurch gekennzeichnet, dass** ihre Viskosität bei 70 °C nicht mehr als 100 mPas beträgt.

4. Addukte nach einem der Ansprüche 1 bis 3, **dadurch gekennzeichnet, dass** die Ausgangsepoxidverbindungen Mono-, Di- oder Polyepoxidverbindungen mit niedriger Viskosität sind, das heißt wirksame Verdünnungsmittel oder ein wirksames Verdünnungsmittel enthaltende Epoxidharze sind.

5. Verfahren zur Herstellung eines Addukts nach einem der Ansprüche 1 bis 4, **dadurch gekennzeichnet, dass** die Ausgangsamino- und -epoxidverbindungen in äquimolaren Mengen gemischt werden oder ein maximaler Überschuss von 50 Mol-% Amin verwendet wird und die Mischung bis zur vollständigen Umsetzung der Epoxidgruppen erhitzt wird.

6. Verfahren nach Anspruch 5, **dadurch gekennzeichnet, dass** die Ausgangsamino- und/oder -epoxidverbindungen als Polymere eingestuft sind.

7. Verfahren nach Anspruch 6, **dadurch gekennzeichnet, dass** die Reaktion in mehr als einem, vorzugsweise in zwei Schritten ausgeführt wird, wobei
a) in dem ersten Schritt eine Di- oder Polyepoxidverbindung mit Monoamin umgesetzt wird und in dem zweiten Schritt das erhaltene Produkt mit einem weiteren Mono- oder Diamin umgesetzt wird, oder
b) in dem ersten Schritt ein primäres Di- oder Polyamin mit einer Monoepoxidverbindung umgesetzt wird und das erhaltene Produkt mit einer weiteren Mono- oder Diepoxidverbindung umgesetzt wird.

8. Verfahren nach einem der Ansprüche 5 bis 7, **dadurch gekennzeichnet, dass** wenn ein oder mehrere Ausgangsamine für die Umwelt und/oder für die Gesundheit gefährlich sind, die Reaktion weitergeführt wird bis der Anteil an einem oder mehreren besonders gefährlichen Ausgangsaminen, der in dem letztendlichen Amin-Epoxid-Addukt zurückbleibt auf weniger als 0,1 Massen-% abgenommen hat.

9. Verfahren nach einem der Ansprüche 5 bis 8, **dadurch gekennzeichnet, dass** das Ausgangsamin und/oder das sekundäre Diamin als wirksames Verdünnungsmittel in einem Überschuss von maximal 50 Mol-%, vorzugsweise maximal 30 Mol-%, das in dem Produkt als Verdünnungsmittel bleibt, verwendet wird.

10. Verwendung des Addukts (der Addukte) oder einer Adduktmischung (der Adduktmischungen) nach einem der Ansprüche 1 bis 4, oder die nach einem der Ansprüche 5 bis 9 hergestellt sind, alleine oder in Kombination mit einem anderen Amin (Aminen) als Aminkomponente (Aminkomponenten) der Mischung in Polyharnstoff-Heißsprühsystemen.

11. Verwendung des Addukts (der Addukte) oder einer Adduktmischung (der Adduktmischungen) nach einem der Ansprüche 1 bis 4, oder die nach einem der Ansprüche 5 bis 9 hergestellt sind, alleine oder in Kombination mit einem anderen Amin (Aminen) und/oder Polyol(en), die in der PUR-Chemie verwendet werden, als Komponenten in den so genannten Polyolmischungen heißgesprühter Hybrid-PU-PUR- oder PUR-PU-Beschichtungssystemen.

12. Verwendung nach Anspruch 10 oder 11, wobei das Addukt (die Addukte) mit einem Anteil von 5-100 %, vorzugweise 10-50 % in Bezug auf die Gesamtmasse des Amins in der Amin- oder Amin-Polyolmischung verwendet wird.

13. Verwendung des Addukts nach Anspruch 3 zur Herstellung einer heißgesprühten PU-Grundierung.

14. Verwendung nach Anspruch 13, wobei das Addukt mit einem Anteil von wenigstens 20 %, vorzugsweise wenigstens 50 % in Bezug auf die Gesamtmasse des Amins in der Aminmischung verwendet wird.

## Revendications

1. Adduits amine-époxyde avec structures symétriques et asymétriques à base d'une part de composés mono-, di- et triamines aliphatiques, cycloaliphatiques, araliphatiques ou aromatiques, et d'autre part de composés mono-, di-, ou polyépoxydes aliphatiques, cycloaliphatiques et aromatiques, ayant une masse moléculaire moyenne ( *M̅ₙ̅* ) au-delà de 300, mais inférieur à 8000, préférentiellement inférieur à 6000, contenant au moins un, préférentiellement en moyenne plus d'un groupe hydroxyle alcoolique par molécule qui est formé au cours de la réaction époxyde-amine, **caractérisés en ce qu'**ils contiennent au moins deux groupes amines par molécule capables de réagir avec des groupes isocyanates, parmi lesquels au maximum un est une amine primaire, et que lesdits adduits soient de natures polymériques et leur viscosité est ≤ 300mPas à 70°C.

2. Adduits selon la revendication 1, **caractérisés en ce qu'**ils ne contiennent pas de groupes amines primaires.

3. Adduits selon les revendications 1 ou 2, **caractérisés en ce que** leur viscosité, à 70°C, n'est pas supérieur à 100 mPas.

4. Adduits selon l'une quelconque des revendications 1 à 3, **caractérisés en ce que** les composés époxydes de départ correspondent à des composés mono-, di- ou polyépoxyde de faible viscosité, c'est-à-dire des diluants actifs ou des résines époxydes contenant du diluant actif.

5. Procédé de préparation d'un adduit selon l'une des revendications 1 à 4, **caractérisé en ce que** les composés amines et époxydes de départ sont mélangés dans des quantités équimolaires ou un excès d'amine de 50 mol% au maximum est utilisé, et le mélange est chauffé jusqu'à la réaction complète des groupes époxydes).

6. Procédé selon la revendication 5, **caractérisé en ce que** les composés amines et/ou époxydes de départ appartiennent à la classe des polymères.

7. Procédé selon la revendication 6, **caractérisé en ce que** la réaction est conduite en plus d'une étape, préférentiellement en deux étapes, où
a) dans la première étape on fait réagir un composé di- ou polyépoxyde avec une monoamine, et dans une seconde étape on fait réagir le produit obtenu avec une autre mono- ou di amine, ou
b) dans la première étape on fait réagir une di- ou polyamine avec un composé mono-époxyde, et on fait réagir le produit obtenu avec un autre composé mono- ou di-époxyde.

8. Procédé selon l'une quelconque des revendications 5 à 7, **caractérisé en ce que** si une ou plus des amines de départ sont dangereuses pour l'environnement et/ou la santé, la réaction est maintenue jusqu'à ce que le rapport de ladite ou desdites dangereuses amines de départ présent dans l'adduit amine-époxyde final diminue en dessous de 0, 1 % en masse.

9. Procédé selon l'une quelconque des revendications 5 à 8, **caractérisé en ce que** l'amine de départ et/ou la diamine secondaire en tant que diluant actif est utilisée en excès de 50mol% au maximum, préférentiellement de 30mol% au maximum, ledit excès est laissé dans le produit en tant que diluant.

10. Utilisation de l'(des) adduit(s) ou d'un(des) mélange(s) d'adduits selon l'une quelconque des revendications de 1 à 4, ou produit selon l'une quelconque des revendications de 5 à 9, seul ou en présence d'autres amine(s), tel que les composants de mélange d'amines dans des systèmes polyuera de pulvérisation à chaud.

11. Utilisation de l'(des) adduit(s) ou d'un(des) mélange(s) d'adduits selon l'une quelconque des revendications de 1 à 4, ou produit selon l'une quelconque des revendications de 5 à 9, seul ou en présence d'autres amine(s) et/ou polyol(s) utilisés en chimie PUR, en tant que composants dans les dénommés mélanges de polyol des systèmes hybrides PU-PUR ou PUR-PU de pulvérisation à chaud pour revêtement.

12. Utilisation selon les revendications 10 ou 11, dans lequel l'(les) adduit(s) est (sont) utilisé(s) en proportion entre 5-100%, préférentiellement entre 10-50% par rapport à la masse totale d'amine dans les mélanges aminés ou polyol-aminés.

13. Utilisation de l'adduit selon la revendication 3 pour la préparation d'une première couche en PU par pulvérisation à chaud.

14. Utilisation selon la revendication 13, ou l'adduit est utilisé au moins à 20%, préférentiellement au moins à 50% référant à la masse totale d'amine dans le mélange aminé.
